# EUROPEAN PATENT SPECIFICATION

(11) **EP 4 581 440 B1**
(45) Date of publication and mention of the grant of the patent: **25.03.2026**
(21) Application number: 23798269.9
(22) Date of filing: 23.10.2023
(51) Int. Cl.: G05B 23/02

(54) **CONTROLLING A TARGET SYSTEM**
STEUERUNG EINES ZIELSYSTEMS
COMMANDE D'UN SYSTÈME CIBLE

(30) Priority: 02.11.2022 FI 20225980
(43) Date of publication of application: 09.07.2025
(73) Proprietor: Elisa Oyj, 00520 Helsinki (FI)
(72) Inventor: UURTIO, Viivi, 00520 Helsinki (FI); RASHID, Asparuh, 00520 Helsinki (FI); ANDERMO, Lars Magnus, 00520 Helsinki (FI)
(74) Representative: Espatent Oy
(86) International application number: PCT/FI2023/050597
(87) International publication number: WO 2024/094920

(56) References cited:
- LU TIANYUAN ET AL: "Review of Anomaly Detection Algorithms for Data Streams", APPLIED SCIENCES, vol. 13, no. 10, 1 January 2023 (2023-01-01), Basel, pages 6353, XP093113714, ISSN: 2076-3417, DOI: 10.3390/app13106353
- XIE GAOGANG ET AL: "Fast low-rank matrix approximation with locality sensitive hashing for quick anomaly detection", IEEE INFOCOM 2017 - IEEE CONFERENCE ON COMPUTER COMMUNICATIONS, IEEE, 1 May 2017 (2017-05-01), pages 1 - 9, XP033160590, DOI: 10.1109/INFOCOM.2017.8057217
- SATHE SAKET ET AL: "Subspace Outlier Detection in Linear Time with Randomized Hashing", IEEE 16TH INTERNATIONAL CONFERENCE ON DATA MINING, 12 December 2016 (2016-12-12), pages 1 - 10, XP093113801, Retrieved from the Internet <URL:https://ieeexplore.ieee.org/stampPDF/getPDF.jsp?tp=&arnumber=7837870&ref=aHR0cHM6Ly9pZWVleHBsb3JlLmllZWUub3JnL2RvY3VtZW50Lzc4Mzc4NzA=> [retrieved on 20231219], DOI: 10.1109/ICDM.2016.62

## Description

### TECHNICAL FIELD

The present application generally relates to controlling a target system.

### BACKGROUND

This section illustrates useful background information without admission of any technique described herein representative of the state of the art.

There are various automated measures that monitor operation of complex target systems, such as communications networks or industrial processes, in order to detect problems so that corrective actions can be taken.

For example anomaly detection models may be used for analyzing the measurement results to identify anomalous measurement results or data points that stand out from the rest of the data. The anomaly detection results can be used for controlling the target system to improve operation of the target system or for avoiding or alleviating error situations. Anomaly detection refers to identification of data points, items, observations, events or other variables that do not conform to an expected pattern of a given data sample or data vector. Anomaly detection models can be trained to learn the structure of normal data samples. The models may output an anomaly score for an analysed sample, and the sample is classified as an anomaly, if the anomaly score exceeds some predefined threshold. There are various unsupervised and semi-supervised learning models that can be used in anomaly detection. Such models include for example k nearest neighbors (kNN), local outlier factor (LOF), principal component analysis (PCA), kernel principal component analysis, independent component analysis (ICA), isolation forest, autoencoder, angle-based outlier detection (ABOD), and others. Different models represent different hypotheses about how anomalous points stand out from the rest of the data.

Prior art solutions are disclosed in XIE GAOGANG et al: "Fast low-rank matrix approximation with locality sensitive hashing for quick anomaly detection", IEEE Infocom 2017 - IEEE Conference on Computer Communications, 1 May 2017, pages 1-9, and in Sathe Saket et al: "Subspace Outlier Detection in Linear Time with Randomized Hashing", IEEE 16th Internation Conference on Data Mining, 12 December 2016, pages 1-10.

Now a new approach is provided for analyzing monitored variables of a target system and controlling the target system.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to the invention there is provided a computer implemented method for controlling a target system. The method comprises
obtaining a first matrix comprising a plurality of monitored variables as columns and a plurality of observations of the monitored variables measured from the target system as rows, wherein each row is associated with one or more dimensions, wherein the dimensions define context for the respective observation;
partitioning the first matrix into a plurality of submatrices, each submatrix comprising a subset of rows of the first matrix;
separately processing the submatrices by
   standardizing values of the submatrix to obtain standardized submatrix, wherein the standardizing is performed by constants calculated from the observations of the first matrix and wherein the standardizing is performed by dividing the values of the submatrix by the respective constant; and
   processing the standardized submatrix by performing anomaly detection on the values of the standardized submatrix and by aggregating results of the anomaly detection by the respective one or more dimensions to a result matrix; and
outputting the result matrix or information derived from the result matrix for the purpose of controlling the target system.

In some example embodiments, the constant for each column is mean calculated over the respective column of the first matrix.

In some example embodiments, the constant for each column is standard deviation calculated over the respective column of the first matrix.

In some example embodiments, aggregating the results of the anomaly detection to the result matrix is performed by using max function.

In some example embodiments, aggregating the results of the anomaly detection to the result matrix is based on certain percentile of the results.

In some example embodiments, the target system is a communications network, and the monitored variables comprise performance data from the communications network.

In some example embodiments, the target system is an industrial process, and the monitored variables comprise sensor data from the industrial process.

In some example embodiments, the dimensions define context for the respective observation.

In some example embodiments, the dimensions comprise information on one or more of the following: time, location, associated device type, associated event.

In some example embodiments, the dimensions comprise information on one or more of the following: subscription, cell, network.

According to the present invention, there is provided an apparatus comprising means for performing the method of the first aspect or any related embodiment. The means may comprise a processor and a memory including computer program code, and wherein the memory and the computer program code are configured to, with the processor, cause the performance of the apparatus.

According to the present invention, there is provided a computer program comprising computer executable program code which when executed by a processor causes an apparatus to perform the method of the first aspect or any related embodiment.

According to the invention there is provided a computer program product comprising a non-transitory computer readable medium having the computer program of the third example aspect stored thereon.

Any foregoing memory medium may comprise a digital data storage such as a data disc or diskette; optical storage; magnetic storage; holographic storage; opto-magnetic storage; phase-change memory; resistive random-access memory; magnetic random-access memory; solid-electrolyte memory; ferroelectric random-access memory; organic memory; or polymer memory. The memory medium may be formed into a device without other substantial functions than storing memory or it may be formed as part of a device with other functions, including but not limited to a memory of a computer; a chip set; and a sub assembly of an electronic device.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
- Fig. 1: schematically shows an example scenario according to an example embodiment;
- Fig. 2: shows a block diagram of an apparatus according to an example embodiment;
- Fig. 3: illustrates an anomaly detection example; and
- Fig. 4: illustrates example process according to certain embodiments.

### DETAILED DESCRIPTION

In the following description, like reference signs denote like elements or steps.

A challenge in analyzing monitored variables, such as measurement results, from complex target systems, such as communications networks or industrial processes, is that the amount of data is huge and therefore anomaly detection mechanisms may be computationally heavy and memory consuming operations.

In the context of present disclosure, monitored variables of the target system may involve sensor data and/or performance data such as pressure, temperature, manufacturing time, yield of a production phase etc. of an industrial process, or sensor data and/or performance data such as key performance indicator values, signal level, number of users, number of dropped connections etc. from a communications network.

Various embodiments aim at providing a memory efficient mechanism to analyze such monitored variables. One of the technical effects provided by present disclosure may be defined as more efficient use of computing resources thereby improving operation of a computer.

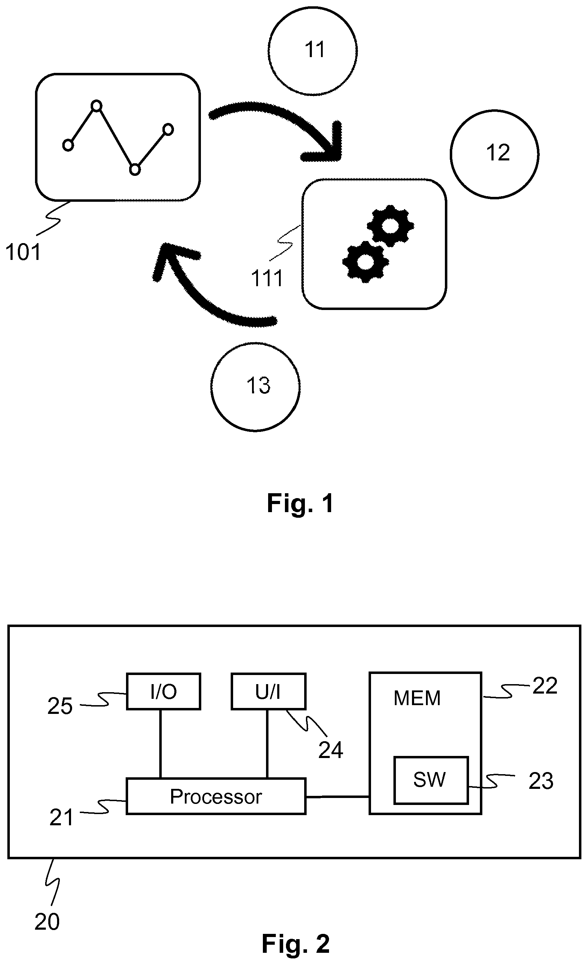

Fig. 1 shows an example scenario according to an embodiment. The scenario shows a controllable target system 101 and an automation system 111 configured to implement controlling the target system and analysis of monitored variables according to example embodiments. The target system 101 may be a communications network comprising a plurality of physical network sites comprising base stations and other network devices, or the target system 101 may be an industrial process. The automation system 111 is configured to implement at least some example embodiments of present disclosure.

In an embodiment of the invention the scenario of Fig. 1 operates as follows: In phase 11, the automation system 111 receives measurement results including at least some monitored variables from the target system 101. In phase 12, the automation system 111 analyzes the measurement results, and in phase 13, the automation system 111 outputs the results of the analysis for the purpose of controlling the target system 101. This output may then be used for manually or automatically controlling the target system 101. The controlling may comprise one or more of: adjusting parameters, changing components or making other changes in the target system, for example.

The process in the automation system 111 may be manually or automatically triggered. Further, the process in the automation system 111 may be periodically or continuously repeated.

Fig. 2 shows a block diagram of an apparatus 20 according to an embodiment. The apparatus 20 is for example a general-purpose computer or server or some other electronic data processing apparatus. The apparatus 20 can be used for implementing at least some embodiments present disclosure. That is, with suitable configuration the apparatus 20 is suited for operating for example as the automation system 111 of foregoing disclosure.

The apparatus 20 comprises a communication interface 25; a processor 21; a user interface 24; and a memory 22. The apparatus 20 further comprises software 23 stored in the memory 22 and operable to be loaded into and executed in the processor 21. The software 23 may comprise one or more software modules and can be in the form of a computer program product.

The processor 21 may comprise a central processing unit (CPU), a microprocessor, a digital signal processor (DSP), a graphics processing unit, or the like. Fig. 2 shows one processor 21, but the apparatus 20 may comprise a plurality of processors.

When the software 23 is executed in the processor 21, the apparatus is controlled to perform one or more embodiments of present disclosure and to accordingly interact with and control the target system such as the target system 101 of Fig. 1.

The user interface 24 is configured for providing interaction with a user of the apparatus. Additionally or alternatively, the user interaction may be implemented through the communication interface 25. The user interface 24 may comprise a circuitry for receiving input from a user of the apparatus 20, e.g., via a keyboard, graphical user interface shown on the display of the apparatus 20, speech recognition circuitry, or an accessory device, such as a headset, and for providing output to the user via, e.g., a graphical user interface or a loudspeaker.

The memory 22 may comprise for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 20 may comprise a plurality of memories. The memory 22 may serve the sole purpose of storing data, or be constructed as a part of an apparatus 20 serving other purposes, such as processing data.

The communication interface 25 may comprise communication modules that implement data transmission to and from the apparatus 20. The communication modules may comprise a wireless or a wired interface module(s) or both. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as Ethernet or universal serial bus (USB), for example. The communication interface 25 may support one or more different communication technologies. The apparatus 20 may additionally or alternatively comprise more than one of the communication interfaces 25.

A skilled person appreciates that in addition to the elements shown in Fig. 2, the apparatus 20 may comprise other elements, such as displays, as well as additional circuitry such as memory chips, application-specific integrated circuits (ASIC), other processing circuitry for specific purposes and the like. Further, it is noted that only one apparatus is shown in Fig. 2, but the embodiments of the invention may equally be implemented in a cluster of shown apparatuses.

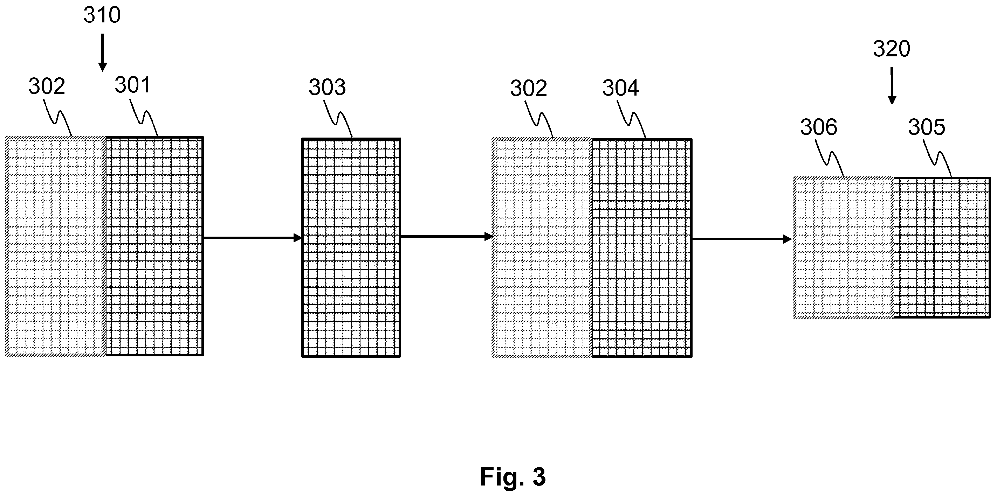

Fig. 3 illustrates an anomaly detection example. Fig. 3 shows a first matrix 310 of measurement results from a target system. The first matrix 310 comprises a plurality of monitored variables as columns and a plurality of observations of the monitored variables measured from the target system as rows. Each row is associated with one or more dimensions. The dimensions define context for the respective observation. The first matrix can be separated into observations 301 and dimensions 302, respectively. In general, the observations 301 and the dimensions 302 have equal number of rows, that is, each row of the observations 301 has a respective row in the dimensions 302.

The following is non-exclusive list of possible dimensions: time, location, device type, device identifier, logical element, event type, management system. In the context of communications network the following dimensions may be additionally or alternatively used: subscriber type, subscription type, network technology, cell type, cell identifier, antenna type, roaming network. Other dimensions may be used, too.

Anomaly detection is applied to the observations 301 to obtain anomaly scores 303. Next, the anomaly scores 303 and the respective dimensions 302 are concatenated. Then, the anomaly scores 303 are aggregated by respective dimensions so that results related to the same dimensions are combined. In this way a result matrix 320 is obtained. The result matrix 320 comprises aggregated anomaly scores 305 accompanied with the respective dimensions 306.

In the process of Fig. 3, decomposing the observations 301 in connection with the anomaly detection may be computationally heavy and memory inefficient as in practical context the first matrix is usually very large.

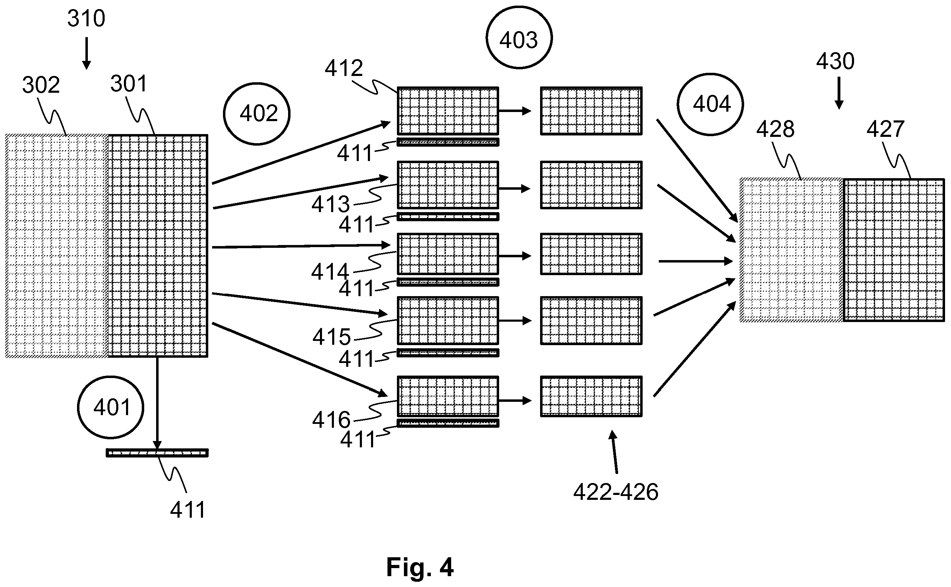

Fig. 4 illustrates example process according to certain embodiments. The process may be implemented in the automation system 111 of Fig. 1 and/or in the apparatus 20 of Fig. 2. The methods are implemented in a computer and do not require human interaction unless otherwise expressly stated. It is to be noted that the methods may however provide output that may be further processed by humans and/or the methods may require user input to start.

The example process of Fig. 4 operates as follows:
Initially a first matrix 310 of measurement results is obtained from a target system. The first matrix may be obtained directly from the target system or through some intermediate system. The first matrix 310 comprises a plurality of monitored variables as columns and a plurality of observations of the monitored variables measured from the target system as rows. Each row is associated with one or more dimensions. The dimensions define context for the respective observation. The first matrix can be separated into observations 301 and dimensions 302, respectively. In general, the observations 301 and the dimensions 302 have equal number of rows, that is, each row of the observations 301 has a respective row in the dimensions 302.

The following is non-exclusive list of possible dimensions: time, location, device type, device identifier, logical element, event type, management system. In the context of communications network the following dimensions may be additionally or alternatively used: subscriber type, subscription type, network technology, cell type, cell identifier, antenna type, roaming network. Other dimensions may be used, too.

In phase 401, a set of constants 411 is calculated from the observations 301 of the first matrix 310. The constants may comprise for example mean calculated over the columns of the observations 301 or standard deviation calculated over the columns of the observations 301. For example, mean calculated over the columns of the observations may suit well for implementations of analyzing monitored observations from a communications network.

In phase 402, the observations of the first matrix are partitioned into a plurality of submatrices 412-416. Each submatrix 412-416 comprises a mutually exclusive subset of the rows of the first matrix 310. The submatrices 412-416 collectively exhaust the rows of the first matrix 310. More precisely, each submatrix 412-416 comprises a different subset of rows of the first matrix 310, i.e. the first matrix is divided into a plurality of partitions. The size and number of the submatrices may vary depending on implementation, size of the first matrix, and partitioning criteria. The submatrices can have the same size or different sizes (i.e. there may be the same amount of rows or different amount of rows in different submatrices).

In phases 403 and 404, the submatrices 412-416 are separately processed to obtain a result matrix 430.

In phase 403, the submatrices 412-416 are standardized by the set of constants 411 to obtain standardized submatrices 422-426. The standardization may be implemented for example by dividing the values of the matrix by the respective constant of the set of constants 411.

In phase 404, anomaly detection is applied to the standardized submatrices 422-426 and the anomaly detection results are aggregated into the result matrix 430 by respective dimensions so that results related to the same dimensions are combined. In this way the result matrix 430 is gradually built as the submatrices are processed. The result matrix 430 comprises aggregated anomaly scores 427 accompanied with the respective dimensions 428.

It is to be noted that although not necessarily shown in all phases on Fig. 4, the observations of the matrixes are always followed by or at least associated with respective dimensions.

The anomaly detection may be performed using any suitable anomaly detection method. For example, one of the following low-rank and sparse matrix decomposition -based anomaly detection methods may be used: robust principal component analysis or robust deep autoencoder.

The aggregation of the anomaly detection results to the result matrix may be performed by using a max function. Another alternative is to take certain percentile of the results, e.g. 90th or 95th percentile could be used.

In an embodiment, the phases 403 and 404 are implemented so that each submatrix 412-416 is independently and separately processed through all steps of phases 403 and 404. In this way, there is no need to store intermediate results (e.g. standardized values or anomaly detection results derived from the standardized values) for a long time. Further, this contributes to savings in the use of memory resources.

The result matrix may be continuously updated as the submatrices are being processed so that anomaly detection results of a submatrix are aggregated to already existing values, if any, of the result matrix 430. In this way, size of the result matrix stays as small as possible.

In an alternative implementation, all submatrices 412-416 may be standardized before proceeding to phase 404 and/or anomaly detection may be applied to all standardized submatrices 422-426 before aggregating the results to the result matrix 430.

It is to be noted that, for the sake of simplicity Fig. 4 shows the submatrices without accompanying dimensions.

The result matrix 430 or information derived from the result matrix 430 may then be used for manually or automatically controlling the target system, e.g. by adjusting parameters, changing components or making other corrective actions.

The inventors of present disclosure have noted that the result matrix 430 obtained by the process of Fig. 4 substantially corresponds to the result matrix 420 obtained by the process of Fig. 3. The difference is that the process of Fig. 4 consumes far less memory resources than the process of Fig. 3.

The following lists details of an example case that comprises monitored variables from a communications network over a period of three days.
- Dimensions: 'lac', 'cell_group2', 'cell_group', 'rnc_bsc', 'msc', 'roaming_network', 'subscriber_category', 'traffic_category', 'release_reason', 'is_vip', 'radio_access_type'
- Monitored variables: 'csfb_mtc_establishment_time', 'csfb_mtc_reenter_time', 'csfb_mtc_reentered', 'csfb_moc_reentered', 'csfb_moc_reenter_time', 'ho_incoming_fail', 'ho_incoming_att', 'ho_outgoing_fail', 'ho_outgoing_att', 'mo_sms_failures', 'mo_sms_attempts', 'mt_sms_failures', 'mt_sms_attempts', 'moc_setup_failure', 'moc_attempts', 'mtc_setup_failure', 'mtc_attempts', 'moc_drops', 'moc_answers', 'mtc_drops', 'mtc_answers', 'rtp_uplink_avg_moscq', 'call_answers_rtp', 'rtp_downlink_avg_moslq', 'call_with_short_conversation_time', 'call_answers', 'call_attempts', 'call_drops', 'call_setup_failure', 'lu_failures', 'lu_attempts'
- Number of observations (i.e. number of rows of the first matrix): 5612136
- Number of partitions (i.e. number of submatrices): 72

For this data, the required memory size for the unpartitioned approach of Fig. 3 is: 8.0 GB and 16.8 GB, for the first and peak memory blocks respectively. Whereas the required memory size for the partitioned approach of Fig. 4 is: 0.6 GB and 2.7 GB for the first and peak memory blocks respectively.

In the following, a simplified practical example is discussed. The example relates to a communications network. The measurement results that are considered in the example comprise the following monitored variables: lu_failures, call drops, and call_setup_failures, wherein lu = location update. Observations of these variables are readily available from communications networks. The dimensions of this example comprise: cell group and traffic category. There are 8 observations, i.e. 8 rows of data.

Table 1 shows a first matrix comprising the measurement results.

**Table 1. First matrix**

| **cell group** | **traffic category** | **lu failures** | **call drops** | **call setup failure** |
|---|---|---|---|---|
| AASA | Not roaming | 3 | 0 | 1 |
| PURU | Not Roaming | 0 | 5 | 0 |
| PYHA | Roaming Inbound | 0 | 0 | 7 |
| KOIGI | Not Roaming | 0 | 0 | 1 |
| PURU | Not Roaming | 1 | 0 | 0 |
| AASA | Not Roaming | 0 | 2 | 0 |
| PAEVA | Not Roaming | 1 | 0 | 0 |
| PYHA | Roaming Inbound | 0 | 3 | 0 |

Table 2 shows a set of constants calculated from the observations of the first matrix. In this example, the constants are mean calculated over the columns of the observations.

**Table 2. Constants for standardization**

| | **lu failures** | **call drops** | **call setup failure** |
|---|---|---|---|
| Mean over observation columns of Table 1 | 0.625 | 1.25 | 1.125 |

The first matrix is partitioned into three submatrices and the submatrices are standardized by dividing the original values by the constants of Table 2. The resulting standardized submatrices are shown in Tables 3, 4 and 5.

**Table 3. First standardized submatrix**

| **cell group** | **traffic category** | **lu failures** | **call drops** | **call setup failure** |
|---|---|---|---|---|
| AASA | Not roaming | 4.8 | 0.0 | 0.9 |
| PURU | Not Roaming | 0.0 | 4.0 | 0.0 |
| PYHA | Roaming Inbound | 0.0 | 0.0 | 6.2 |

**Table 4. Second standardized submatrix**

| **cell group** | **traffic category** | **lu failures** | **call drops** | **call setup failure** |
|---|---|---|---|---|
| KOIGI | Not Roaming | 0.0 | 0.0 | 0.9 |
| PURU | Not Roaming | 1.6 | 0.0 | 0.0 |

**Table 5. Third standardized submatrix**

| **cell group** | **traffic category** | **lu failures** | **call drops** | **call setup failure** |
|---|---|---|---|---|
| AASA | Not Roaming | 0.0 | 1.6 | 0.0 |
| PAEVA | Not Roaming | 1.6 | 0.0 | 0.0 |
| PYHA | Roaming Inbound | 0.0 | 2.4 | 0.0 |

Anomaly detection is applied to the standardized observations of the submatrices of Tables 3, 4 and 5 and the results are aggregated to obtain a result matrix shown in Table 6. The anomaly detection method that was used in this example is robust principal component analysis and the aggregation was implemented by, simultaneously with the anomaly detection, updating in the result matrix the value of the corresponding dimension combination. The updating was done using max function. The feature of updating the result matrix simultaneously with the anomaly detection refers to that once anomaly detection results are ready, they are updated to the result matrix before proceeding to the next submatrix.

**Table 6. Result matrix**

| **cell group** | **traffic category** | **lu failures** | **call drops** | **call setup failure** |
|---|---|---|---|---|
| AASA | Not roaming | 2.5 | 1.0 | 0.4 |
| PURU | Not Roaming | 1.0 | 2.0 | 0.0 |
| PYHA | Roaming Inbound | 0.0 | 2.1 | 4.2 |
| KOIGI | Not Roaming | 0.0 | 0.0 | 0.54 |
| PAEVA | Not Roaming | 1.4 | 0.0 | 0.0 |

With respect to practical implementation of example embodiments it is noted that although herein disclosed examples present monitored variables as columns and observations of the monitored variables as rows, these can be interchangeably applied. A solution that would have observations of monitored variables as columns and monitored variables as rows would be technically the same.

Without in any way limiting the scope, interpretation, or application of the claims appearing below, a technical effect of one or more of the example embodiments disclosed herein is improved analysis of measurement results of a complex target system. Various embodiments suit well for analyzing large sets of monitored variables. Such analysis is impossible or at least very difficult to implement manually. Various embodiments provide memory efficient mechanism to analyze the monitored variables whereby it may be possible to achieve savings in usage of computing resources.

A further technical effect is that more efficient way to control a complex target system is achieved. As the analysis requires less memory resources, the analysis may be faster and error correction, parameter adjustments and the like controlling actions may be performed faster. Use of various example embodiments may be particularly beneficial in connection with using low-rank and sparse matrix decomposition -based anomaly detection methods in the analysis of a complex target system.

If desired, the different functions discussed herein may be performed in a different order and/or concurrently with each other. Furthermore, if desired, one or more of the before-described functions may be optional or may be combined

Various embodiments have been presented. It should be appreciated that in this document, words comprise, include and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A computer implemented method for controlling a target system (101), the method comprising obtaining (11) a first matrix (310) comprising a plurality of monitored variables as columns and a plurality of observations of the monitored variables measured from the target system (101) as rows, wherein each row is associated with one or more dimensions, wherein the dimensions define context for the respective observation; the method being **characterized by**:
partitioning (402) the first matrix into a plurality of submatrices (412-416), each submatrix comprising a subset of rows of the first matrix;
separately processing the submatrices by
standardizing (403) values of the submatrix (412-416) to obtain standardized submatrix (422-426), wherein the standardizing is performed by constants (411) calculated (401) from the observations (301) of the first matrix (310) and wherein the standardizing is performed by dividing the values of the submatrix by the respective constant; and
processing (404) the standardized submatrix (422-426) by performing anomaly detection on the values of the standardized submatrix and by aggregating results of the anomaly detection by the respective one or more dimensions to a result matrix (430); and
outputting (13) the result matrix (430) or information derived from the result matrix (430) for the purpose of controlling the target system (101).

2. The method of claim 1, wherein the constant for each column is mean calculated over the respective column of the first matrix (310).

3. The method of claim 1, wherein the constant for each column is standard deviation calculated over the respective column of the first matrix (310).

4. The method of any preceding claim, wherein aggregating the results of the anomaly detection to the result matrix (430) is performed by using max function.

5. The method of any one of claims 1-3, wherein aggregating the results of the anomaly detection to the result matrix (430) is based on certain percentile of the results.

6. The method of any preceding claim, wherein the target system is a communications network, and the monitored variables comprise performance data from the communications network.

7. The method of any one of claims 1-5, wherein the target system is an industrial process, and the monitored variables comprise sensor data from the industrial process.

8. The method of any preceding claim, wherein the dimensions comprise information on one or more of the following: time, location, associated device type, associated event.

9. The method of any preceding claim, wherein the dimensions comprise information on one or more of the following: subscription, cell, network.

10. An apparatus (20, 111) comprising means for performing the method of any one of claims 1-9.

11. The apparatus (20, 111) of claim 10, wherein the means comprise a processor (21) and a memory (22) including computer program code, and wherein the memory and the computer program code are configured to, with the processor, cause the performance of the apparatus.

12. A computer program comprising computer executable program code (23) which when executed in an apparatus causes the apparatus to perform the method of any one of claims 1-9.

## Patentansprüche

1. Computer-implementiertes Verfahren zur Steuerung eines Zielsystems (101), wobei das Verfahren umfasst
Erhalten (11) einer ersten Matrix (310), die eine Mehrzahl von überwachten Variablen als Spalten und eine Mehrzahl von gemessenen Beobachtungen der überwachten Variablen aus dem Zielsystem (101) als Zeilen umfasst, wobei jede Zeile mit einer oder mehreren Dimensionen verknüpft ist, wobei die Dimensionen einen Kontext für die jeweilige Beobachtung definieren; wobei das Verfahren **gekennzeichnet ist durch**:
Aufteilen (402) der ersten Matrix in eine Mehrzahl von Teilmatrizen (412-416), wobei jede Teilmatrix eine Teilmenge von Zeilen der ersten Matrix umfasst;
separates Verarbeiten der Teilmatrizen **durch**
Standardisieren (403) von Werten der Teilmatrix (412-416), um eine standardisierte Teilmatrix (422-426) zu erhalten, wobei das Standardisieren **durch** Konstanten (411) ausgeführt wird, die aus den Beobachtungen (301) der ersten Matrix (310) berechnet (401) werden, und wobei das Standardisieren ausgeführt wird, indem die Werte der Teilmatrix **durch** die jeweilige Konstante geteilt werden; und
Verarbeiten (404) der standardisierten Teilmatrix (422-426) **durch** Ausführen einer Anomalieerkennung an den Werten der standardisierten Teilmatrix und **durch** Aggregieren von Ergebnissen der Anomalieerkennung über die jeweilige oder mehrere Dimensionen zu einer Ergebnismatrix (430); und
Ausgeben (13) der Ergebnismatrix (430) oder von aus der Ergebnismatrix (430) abgeleiteten Informationen zum Zwecke der Steuerung des Zielsystems (101).

2. Verfahren nach Anspruch 1, wobei die Konstante für jede Spalte ein über die jeweilige Spalte der ersten Matrix (310) berechneter Mittelwert ist.

3. Verfahren nach Anspruch 1, wobei die Konstante für jede Spalte eine über die jeweilige Spalte der ersten Matrix (310) berechnete Standardabweichung ist.

4. Verfahren nach einem vorhergehenden Anspruch, wobei das Aggregieren der Ergebnisse der Anomalieerkennung zur Ergebnismatrix (430) mit Hilfe der max-Funktion ausgeführt wird.

5. Verfahren nach einem der Ansprüche 1 bis 3, wobei das Aggregieren der Ergebnisse der Anomalieerkennung zur Ergebnismatrix (430) auf einem bestimmten Perzentil der Ergebnisse beruht.

6. Verfahren nach einem vorhergehenden Anspruch, wobei das Zielsystem ein Kommunikationsnetz ist und die überwachten Variablen Leistungsdaten aus dem Kommunikationsnetz umfassen.

7. Verfahren nach einem der Ansprüche 1 bis 5, wobei das Zielsystem ein Industrieprozess ist und die überwachten Variablen Sensordaten aus dem Industrieprozess umfassen.

8. Verfahren nach einem vorhergehenden Anspruch, wobei die Dimensionen Informationen über eines oder mehreres von Folgendem umfassen: Zeit, Ort, verknüpfter Gerätetyp, verknüpftes Ereignis.

9. Verfahren nach einem vorhergehenden Anspruch, wobei die Dimensionen Informationen über eines oder mehreres von Folgendem umfassen: Abonnement, Zelle, Netz.

10. Vorrichtung (20, 111), die Mittel zur Ausführung des Verfahrens nach einem der Ansprüche 1 bis 9 umfasst.

11. Vorrichtung (20, 111) nach Anspruch 10, wobei die Mittel einen Prozessor (21) und einen Speicher (22), der einen Computerprogrammcode enthält, umfassen, und wobei der Speicher und der Computerprogrammcode dazu ausgelegt sind, mit dem Prozessor das Arbeiten der Vorrichtung zu veranlassen.

12. Computerprogramm, das einen computerausführbaren Programmcode (23) umfasst, der, bei Ausführung in einer Vorrichtung, die Vorrichtung dazu veranlasst, das Verfahren nach einem der Ansprüche 1-9 auszuführen.

## Revendications

1. Procédé mis en œuvre par ordinateur pour commander un système cible (101), ledit procédé comprenant les étapes consistant à
obtenir (11) une première matrice (310) comprenant une pluralité de variables surveillées comme colonnes et une pluralité d'observations mesurées des variables surveillées du système cible (101) comme lignes, chaque ligne étant associée à une ou plusieurs dimensions, les dimensions définissant un contexte pour l'observation respective; ledit procédé étant **caractérisé par** les étapes consistant à :
partitionner (402) la première matrice en une pluralité de sous-matrices (412-416), chaque sous-matrice comprenant un sous-ensemble de lignes de la première matrice;
traiter les sous-matrices séparément en
standardisant (403) des valeurs de la sous-matrice (412-416) pour obtenir une sous-matrice standardisée (422-426), ladite standardisation étant effectuée par des constantes (411) calculées (401) à partir des observations (301) de la première matrice (310), et ladite standardisation étant effectuée par la division des valeurs de la sous-matrice par la constante respective; et
traitant (404) la sous-matrice standardisée (422-426) en effectuant une détection d'anomalies sur les valeurs de la sous-matrice standardisée et en agrégeant des résultats de la détection d'anomalies sur les une ou plusieurs dimensions respectives dans une matrice de résultats (430); et
émettre (13) la matrice de résultats (430) ou des informations dérivées de la matrice de résultats (430) pour les besoins de la commande du système cible (101).

2. Procédé selon la revendication 1, dans lequel la constante pour chaque colonne est une moyenne calculée sur la colonne respective de la première matrice (310).

3. Procédé selon la revendication 1, dans lequel la constante pour chaque colonne est un écart-type calculé sur la colonne respective de la première matrice (310).

4. Procédé selon une revendication précédente quelconque, dans lequel l'agrégation des résultats de la détection d'anomalies dans la matrice de résultats (430) est effectuée à l'aide de la fonction max.

5. Procédé selon l'une des revendications 1 à 3, dans lequel l'agrégation des résultats de la détection d'anomalie dans la matrice de résultats (430) est basée sur un certain percentile des résultats.

6. Procédé selon une revendication précédente quelconque, dans lequel le système cible est un réseau de communication et les variables surveillées comprennent des données de performance provenant du réseau de communication.

7. Procédé selon l'une des revendications 1 à 5, dans lequel le système cible est un processus industriel et les variables surveillées comprennent des données de capteurs provenant du processus industriel.

8. Procédé selon une revendication précédente quelconque, dans lequel les dimensions comprennent des informations sur un ou plusieurs des éléments suivants : le temps, le lieu, le type de dispositif associé, l'évènement associé.

9. Procédé selon une revendication précédente quelconque, dans lequel les dimensions comprennent des informations sur un ou plusieurs des éléments suivants : la souscription, la cellule, le réseau.

10. Appareil (20, 111) comprenant des moyens pour la réalisation du procédé selon l'une des revendications 1 à 9.

11. Appareil (20, 111) selon la revendication 10, dans lequel les moyens comprennent un processeur (21) et une mémoire (22) comportant un code de programme informatique, et dans lequel la mémoire et le code de programme informatique sont configurés pour provoquer, avec le processeur, le fonctionnement de l'appareil.

12. Programme informatique comprenant un code de programme informatique exécutable par ordinateur (23) qui, lorsqu'il est exécuté dans un appareil, amène l'appareil à effectuer le procédé selon l'une des revendications 1 à 9.
